Europäisches Patentamt

European Patent Office

Office européen des brevets

(19)

(11) Veröffentlichungsnummer: **0 450 025 B1**

(12) **EUROPÄISCHE PATENTSCHRIFT**

(45) Veröffentlichungstag der Patentschrift: **18.01.95**

(51) Int. Cl.6: **C09K 19/58**, G02F 1/133, C09K 19/02

(21) Anmeldenummer: **90915403.1**

(22) Anmeldetag: **26.10.90**

(86) Internationale Anmeldenummer: **PCT/CH90/00250**

(87) Internationale Veröffentlichungsnummer: **WO 91/06613 (16.05.91 91/11)**

(54) **TEMPERATURKOMPENSATION VON FLÜSSIGKRISTALLPARAMETERN.**

(30) Priorität: **01.11.89 CH 3948/89**

(43) Veröffentlichungstag der Anmeldung: **09.10.91 Patentblatt 91/41**

(45) Bekanntmachung des Hinweises auf die Patenterteilung: **18.01.95 Patentblatt 95/03**

(84) Benannte Vertragsstaaten: **CH DE FR GB IT LI NL**

(56) Entgegenhaltungen:
**EP-A- 0 211 646**
**EP-A- 0 217 240**
**EP-A- 0 218 132**
**EP-A- 0 351 746**

**Zeitschrift für Naturforschung, Band 34A, Nr. 5, Mai 1979; A. Göbl-Wunsch et al.: "Temperaturfunktionen der durch Mehrfachdotierung mit chiralen Verbindungen in einer nematischen Phase induzierten Helixganghöhe", Seiten 594-599**

(73) Patentinhaber: **F. HOFFMANN-LA ROCHE AG**
**Postfach 3255**
**CH-4002 Basel (CH)**

(72) Erfinder: **BUCHECKER, Richard**
**Felsenstrasse 10**
**CH-8008 Zürich (CH)**
Erfinder: **FÜNFSCHILLING, Jürg**
**Weiherhofstrasse 138**
**CH-4054 Basel (CH)**
Erfinder: **SCHADT, Martin**
**Liestalerstrasse 77**
**CH-4411 Seltisberg (CH)**

(74) Vertreter: **Buntz, Gerhard et al**
**Grenzacherstrasse 124**
**Postfach 3255**
**CH-4002 Basel (CH)**

**Beschreibung**

Die Erfindung betrifft cholesterische Flüssigkristallmischungen bestehend aus einem nematischen Flüssigkristall, der mit mindestens zwei chiralen Zusätzen dotiert ist.

Für verschiedene neue Einsatzbereiche werden in zunehmendem Masse cholesterische Flüssigkristalle mit kleiner Ganghöhe verwendet, z.B. für polarisierte Lichtquellen [vgl. z.B. Belayev, S.V., et al. in Jpn.J.Appl.Phys. 29, No.4, (1990), L634] oder zur Sichtbarmachung von Temperaturen durch Farbänderungen cholesterischer Schichten. Bei der letztgenannten Anwendung wird bekanntlich die starke Temperaturabhängigkeit der Helixganghöhe und damit der selektiven Reflexionsfarbe von cholesterischen Flüssigkristallen genutzt. Diese erlaubt es, Temperaturänderungen von wenigen O,1 °C durch Verschiebung der selektiven Reflexionswellenlänge einer cholesterischen Schicht sichtbar zu machen.

Es gibt aber Anwendungen, bei denen keine oder nur eine geringe Temperaturabhängigkeit der selektiven Reflexion von cholesterischen Flüssigkristallen zulässig ist, weil eine starke Temperaturabhängigkeit erwünschte Effekte stören oder verunmöglichen würde.

Es wurde bereits gezeigt, dass die Temperaturabhängigkeit der Ganghöhe bei chiralen nematischen Mischungen verringert werden kann, indem sie mit rechts- und linkssinnigen chiralen Zusätzen dotiert werden [vgl. z.B. GöblWunsch, A. et al. in Zeitschr. Naturforsch. 34a (1979)594; Gerber, P. Phys. Lett. No. 3(1980), 285]. Mit diesen bekannten Verfahren, die zu cholesterischen Flüssigkristallen mit grosser Ganghöhe führen, erreicht man eine Kompensation der Temperaturabhängigkeit elektro-optischer Eigenschaften von nematischen Feldeffekten.

Die Anwendung eines ähnlichen Verfahrens zur Kompensation der Temperaturabhängigkeit des Mittelwerts $\lambda_0$ des selektiven Reflexionsbandes von cholesterischen Flüssigkristallen mit geringer Ganghöhe wäre nur möglich, wenn bisher nicht bekannte Dotierstoffe und Verfahren zu deren Anwendung eingesetzt werden könnten.

Der Erfindung liegt daher die Aufgabe zugrunde, cholesterische Flüssigkristallmischungen mit temperaturkompensierter selektiver Reflexion und ein Verfahren zur Erzielung einer derartigen Temperaturkompensation anzugeben.

Erfindungsgemäss wird dies erreicht durch Mischung eines nematischen Flüssigkristallmaterials mit mindestens zwei chiralen Dotierstoffen welche die Bedingungen

(1) $\quad a(c_1 B_1 + c_2 B_2) = b(c_1 A_1 + c_2 A_2)$

und

(2) $\quad 1/\lambda_0(T) = a(c_1 A_1 + c_2 A_2) + aT(c_1 B_1 + c_2 B_2) + bT(c_1 A_1 + c_2 A_2)$

erfüllen, wobei $\lambda_0$ der Mittelwert des Wellenlängenbandes der selektiven Reflexion und $c_1, c_2, ...$ die Konzentrationen der chiralen Dotierstoffe sind. $A_i$, $B_i$ sindKoeffizienten in der folgenden Reihenentwicklung

$$(3) \qquad 1/\lambda_0(T) = \sum_{i=1}^{n} c_i [A_i + B_i(T\text{-}22°C) + C_i(T\text{-}22°C)^2] \cdot [a + b(T\text{-}22°C)]$$

Die Approximation (1) wird wie folgt hergeleitet: Die Temperaturabhängigkeit der Verdrillung $\frac{1}{p}$ einer nematischen Mischung, die mit einer Anzahl n chiraler Zusätze mit den Konzentrationen $c_i$ dotiert ist, kann wie folgt dargestellt werden:

$$(4) \qquad 1/p(T) = \sum_{i=1}^{n} c_i [A_i + B_i(T\text{-}22°C) + C_i(T\text{-}22°C)^2 + ...]$$

wobei die Koeffizienten $B_i$ im linearen Term im wesentlichen die Temperaturabhängigkeit der Verdrillung angeben. Durch Berücksichtigung der Temperaturabhängigkeit des mittleren Brechungsindex $\bar{n}(T)$ -der zur Temperaturabhängigkeit des nematischen Ordnungsgrades S(T) proportional istgemäss

$$(5) \quad 1 \big/ \bar{n}(T) = \frac{2n_O(T) + \Delta n(T)}{2} = a + b\,(T-22°C)$$

wobei $\Delta n$ die optische Anisotropie und $n_o$ den ordentlichen Brechungsindex des Flüssigkristalls bedeuten, erhält man für die Temperaturabhängigkeit der mittleren Wellenlänge $\lambda_o$ planarer cholesterischer Schichten, die aus einem mit n chiralen Zusätzen dotierten nematischen Flüssigkristall bestehen

$$(6) \quad 1/\lambda_O(T) = \sum_{i=1}^{n} c_i[A_i + B_i\,(T-22°C) + C_i(T-22°C)^2]\cdot[a + b\,(T-22°C)]$$

Durch Vernachlässigung der quadratischen und höheren Potenzen reduziert sich diese Gleichung für zwei chirale Zusätze auf

$$(2) \quad 1/\lambda_o(T) = a\,(c_1 A_1 + c_2 A_2) + aT\,(c_1 B_1 + c_2 B_2) + bT\,(c_1 A_1 + c_2 A_2)$$

Da im vorliegenden Fall die Ganghöhen der beiden chiralen Zusätze additiv wirken müssen, um die für die selektive Reflexion im sichtbaren Bereich erforderliche kleine Ganghöhe zu erhalten, müssen die Koeffizienten $A_1$ und $A_2$ dasselbe Vorzeichen aufweisen, bzw.

$$(7) \quad |c_1 A_1 + c_2 A_2| \neq 0$$

sein.

Somit folgt aus Gleichung (2), dass Temperaturkompensation von $\lambda o$ nur erreichbar ist, wenn zwei oder mehr chirale Zusätze der Bedingung

$$(1) \quad a\,(c_1 B_1 + c_2 B_2) = b\,(c_1 A_1 + c_2 A_2)$$

genügen. Im speziellen Fall, in dem die Temperaturabhängigkeit von $\bar{n}(T)$ vernachlässigbar ist, d.h. bei Temperaturen weit unterhalb des cholesterisch-isotropen Phasenüberganges $T \ll Tc$, ergibt sich aus Gleichung (1), dass die linearen Temperaturkoeffizienten $B_i$ der beiden chiralen Zusätze entgegengesetzte Vorzeichen haben und die Bedingung $c_1 B_1 = c_2 B_2$ erfüllen müssen. Alternativ können auch chirale Zusätze verwendet werden, deren Temperaturabhängigkeit der Helixganghöhe gering ist, bzw. so beschaffen ist, dass $\bar{n}(T)$ gerade kompensiert wird. Damit kann auch $\lambda_o \neq f(T)$ erreicht werden.

Im folgenden werden zwei Mischungsbeispiele beschrieben, die die beiden vorstehend genannten Alternativen belegen.

Mischung I besteht aus 76,0 Gew.% eines nachstehend näher beschriebenen, aus 26 Komponenten zusammengesetzten nematischen Flüssigkristalls, der mit folgenden rechts drehenden cholesterischen Zusätzen dotiert ist; wobei jeweils die Koeffizienten A, B und C der Formel (3) angegeben sind:

5,0 Gew.% Diethyl (4S,5S)-2-[trans-4-(p-cyanophenyl)cyclohexyl]-1,3-dioxolane-4,5-dicarboxylate; $A = 11.96\cdot10^{-2}$, $B = -2.843\cdot10^{-4}$, $C = -0.478 \cdot 10^{-6}$

5,1 Gew.% (R)-1-Methylheptyl p-[(2S,4R,5S)-5-decyl-4-methyl-m-dioxan-2-yl]benzoate; $A = 14.18.10^{-2}$, $B = -2.946 \cdot 10^{-4}$, $C = -2.793 \cdot 10^{-6}$

7,5 Gew.% 2,2'-p-phenylenebis[(2S,4R,5S)-4-methyl-5-octyl-m-dioxane]; $A = 13.48 \cdot 10^{-2}$, $B = 0.328 \cdot 10^{-4}$, $C = 0.266 \cdot 10^{-6}$

6,4 Gew.% (R)-alpha-methylheptyl 4'-[(2S,4R,5S)-4-methyl-5-octyl-m-dioxan-2-yl]-4-biphenylcarboxylate; $A = 14.72 \cdot 10^{-2}$, $B = 1.757 \cdot 10^{-4}$, $C = -1.138 \cdot 10^{-6}$

Der nematische Flüssigkristall ist wie folgt zusammengesetzt:

2,0 Gew.% 4'-ethyl-4-biphenylcarbonitrile

2,0 Gew.% 4'-propyl-4-biphenylcarbonitrile

7,0 Gew.% 4'-pentyl-4-biphenylcarbonitrile

7,0 Gew.% p-[trans-4-[(E)-1 + pentenyl]cyclohexyl]benzonitrile

4,0 Gew.% p-[trans-[(E)-propenyl]cyclohexyl]benzonitrile

3,0 Gew.% trans-4-(3-butenyl)-trans-4'-(p-fluorophenyl)[bicyclohexyl]

3,0 Gew.% trans-4-(p-fluorophenyl)-trans-4'-[(E)-propenyl][1,1'-bicyclohexyl]

3,0 Gew.% 4''-pentyl⟨p-terphenyl⟩-4-carbonitrile

3,0 Gew.% 4'-[trans-4-(3-butenyl)cyclohexyl]-4-biphenylcarbonitrile

2,0 Gew.% 4'-[trans-4-[(E(-3-pentenyl]cyclohexyl]-4-biphenylcarbonitrile

2,0 Gew.% 4'-[trans-4-[(E)-propenyl]cyclohexyl]-4-biphenylcarbonitrile

6,0 Gew.% 1-[2-(trans-4-butylcyclohexyl)ethyl]-4-(trans-4-pentylcyclohexyl) benzene

4,0 Gew.% 1-[2-(trans-4-butylcyclohexyl)ethyl]-4-[trans-4-(4-pentenyl) cyclohexyl]benzene

3,0 Gew.% 4-[2-(trans-4-butylcyclohexyl)ethyl]-4'-(trans-4-pentyl -cyclohexyl)-1,1'-ethylenedibenzene

5,0 Gew.% ethyl p-[2-(trans-4-propylcyclohexyl)ethyl]phenyl ether

6,0 Gew.% ethyl p-[2-(trans-4-pentylcyclohexyl)ethyl]phenyl ether

5,0 Gew.% 4-trans-pentyl-4'-trans-vinyl[1,1'-bicyclohexyl]

6,0 Gew.% methyl [4'-trans-[(E)-propenyl][1,1'-bicyclohexyl]-4-trans-yl]methyl ether

4,0 Gew.% 4'-trans-(3-butenyl)[1,1'-bicyclohexyl]-4-trans-yl ethyl ether

3,0 Gew.% trans-4-methoxy-trans-4'-[(E)-3-pentenyl][bicyclohexyl]

2,0 Gew.% 1-ethoxy-4-[trans-4-[(E)-3-pentenyl]cyclohexyl]benzene

3,0 Gew.% (E)-2-butenyl p-(trans-4-propylcyclohexyl)phenyl ether

4,0 Gew.% (E)-2-butenyl p-(trans-4-pentylcyclohexyl)phenyl ether

3,0 Gew.% 1-ethyl-4'-[trans-4-[(E)-3-pentenyl]cyclohexyl]biphenyl

4,0 Gew.% 1-[trans-4-[(E)-3-pentenyl]cyclohexyl]-4'-propylbiphenyl

3,0 Gew.% p-[trans-4-(3-pentenyl)cyclohexyl]phenyl trans-4-propylcyclohexanecarboxylate

Mischung II besteht aus 75,1 Gew.% eines nachstehend näher beschriebenen, aus 24 Einzelkomponenten bestehenden nematischen Flüssigkristall, der mit folgenden links drehenden cholesterischen Zusätzen dotiert ist; wobei wiederum für jeden Zusatz die Koeffizienten A, B und C der Formel (3) angegeben sind:

3,9 Gew.% 16beta-methyl-17-oxoandrost-5-en-3beta-yl acetate; A = -12.73 $\cdot$ $10^{-2}$, B = 4.529 $\cdot$ $10^{-4}$, C = -0.844 $\cdot$ $10^{-6}$

7,3 Gew.% bis[(S)-1-methylheptyl]p-terphenyl-4,4''-dicarboxylate; A = -19.98 $\cdot$ $10^{-2}$, B = 0.138 $\cdot$ $10^{-4}$, C = 1.535 $\cdot$ $10^{-6}$

6,9 Gew.% dibutyl (4R,5R)-2-[trans-4-(p-cyanophenyl)cyclohexyl]-1,3-dioxolane-4,5-dicarboxylate; A = 8.912 $\cdot$ $10^{-2}$, B = 0.342 $\cdot$ $10^{-4}$, C = 1.038 $\cdot$ $10^{-6}$

6,8 Gew.% diethyl (4R,5R)-2-[trans-4-(p-cyanophenyl)cyclohexyl]-1,3-dioxolane-4,5-dicarboxylate; A = -11.66 $\cdot$ $10^{-2}$, B = 2.862 $\cdot$ $10^{-4}$, C = -0.562 $\cdot$ $10^{-6}$

Der nematische Flüssigkristall ist wie folgt zusammengesetzt:

3,0 Gew.% 4'-ethyl-4-biphenylcarbonitrile

3,0 Gew.% 4'-propyl-4-biphenylcarbonitrile

5,0 Gew.% 4'-pentyl-4-biphenylcarbonitrile

4,0 Gew.% p-[trans-4-(3-butenyl)cyclohexyl]benzonitrile

8,0 Gew.% p-[trans-4-[(E)-1 + pentenyl]cyclohexyl]benzonitrile

3,0 Gew.% 4''-pentyl⟨p-terphenyl⟩-4-carbonitrile

3,0 Gew.% 4'-[trans-4-(3-butenyl)cyclohexyl]-4-biphenylcarbonitrile

2,0 Gew.% 4'-[trans-4-[(E(-3-pentenyl]cyclohexyl]-4-biphenylcarbonitrile

8,0 Gew.% 1-[2-(trans-4-butylcyclohexyl)ethyl]-4-(trans-4-pentylcyclohexyl) benzene

2,0 Gew.% 5-(trans-4-pentylcyclohexyl)-2-[p-(trans-4-propylcyclohexyl) phenyl]pyrimidine

3,0 Gew.% 4-[2-(trans-4-butylcyclohexyl)ethyl]-4'-(trans-4-pentyl -cyclohexyl)-1,1'-ethylenedibenzene

3,0 Gew.% p-cyanophenyl trans-4-[2-(trans-4-propylcyclohexyl)ethyl] cyclohexanecarboxylate

7,0 Gew.% ethyl p-[2-(trans-4-propylcyclohexyl)ethyl]phenyl ether

10,0 Gew.% ethyl p-[2-(trans-4-pentylcyclohexyl)ethyl]phenyl ether

6,0 Gew.% 4-trans-pentyl-4'-trans-vinyl[1,1'-bicyclohexyl]

5,0 Gew.% 4'-trans-(3-butenyl)[1,1'-bicyclohexyl]-4-trans-yl ethyl ether

3,0 Gew.% 4'-trans-(4-pentenyl)[1,1'-bicyclohexyl]-4-trans-yl ethyl ether

3,0 Gew.% trans-4-methoxy-trans-4'-[(E)-3-pentenyl][bicyclohexyl]

2,0 Gew.% 1-ethoxy-4-[trans-4-[(E)-3-pentenyl]cyclohexyl]benzene

3,0 Gew.% (E)-2-butenyl p-(trans-4-propylcyclohexyl)phenyl ether

4,0 Gew.% (E)-2-butenyl p-(trans-4-pentylcyclohexyl)phenyl ether

3,0 Gew.% 1-ethyl-4'[trans-4-[(E)-3-pentenyl]cyclohexyl]biphenyl

4,0 Gew.% 1-[trans-4-[(E)-3-pentenyl]cyclohexyl]-4'-propylbiphenyl

3,0 Gew.% p-[trans-4-(3-pentenyl)cyclohexyl]phenyl trans-4-propylcyclohexanecarboxylate

Die gemessenen Eigenschaften der beiden Mischungen I und II sind in der folgenden Tabelle zusammengestellt:

| Parameter | Mischung I | Mischung II |
|---|---|---|
| $\lambda_o$ [nm] | 470 | 470 |
| $\Delta\lambda_{FWHM}$ [nm] | 35 | 35 |
| $d\lambda_o/dT$ [nm/°C] | 0,10 | -0,10 |
| A [nm/Gew.%] | 6.02 | 6.02 |
| $n_o$ | 1,498 | 1,496 |
| $\Delta n$ | 0,120 | 0,110 |
| Temperaturbereich [°C] | 0-50 | 0-50 |
| $T_c$ [°C] | 57 | 63 |
| Helix-Drehsinn | L | R |

In dieser Tabelle bedeuten $\lambda_o$ die mittlere Wellenlänge der selektiven Reflexion; $\Delta\lambda_{FWHM}$ die Bandbreite der selektiven Reflexion (FWHM = full width at half maximum); $d\lambda_o/dT$ die Temperaturabhängigkeit von $\lambda_o$ im Betriebstemperaturbereich; A einen Koeffizienten, der die Erhöhung von $\lambda_o(c)$ infolge der Dotierung der cholesterischen Mischung mit ihrer nematischen "Wirts"-Substanz nach folgender Formel angibt: $\lambda_o(c) = \lambda_o + Ac$; $T_c$ die cholesterisch-isotrope Uebergangstemperatur.

**Patentansprüche**

1. Cholesterische Flüssigkristallmischung bestehend aus einem nematischen Flüssigkristall, der mit mindestens zwei chiralen Zusätzen dotiert und dadurch gekennzeichnet ist, dass die chiralen Zusätze die Bedingungen

(1) $\quad a (c_1 B_1 + c_2 B_2) = b (c_1 A_1 + c_2 A_2)$

und

(2) $\quad 1/\lambda_o(T) = a (c_1 A_1 + c_2 A_2) + aT (c_1 B_1 + c_2 B_2) + bT (c_1 A_1 + c_2 A_2)$

erfüllen, und damit die selektive Reflexion der gesamten Mischung temperaturkompensiert ist und über den Betriebstemperaturbereich der Mischung $d\lambda_o/dT < 0,5$ nm/°C gilt, wobei $\lambda_o$ der Mittelwert des Wellenlängenbandes der selektiven Reflexion, $c_1, c_2, \ldots$ die Konzentrationen der chiralen Dotierstoffe und $A_i$, $B_i$ Koeffizienten in der folgenden Reihenentwicklung

$$(3) \qquad 1/\lambda_o(T) = \sum_{i=1}^{n} c_i [A_i + B_i (T-22°C) + C_i (T-22°C)^2] \cdot [a + b (T-22°C)]$$

sind.

2. Verfahren zur Temperaturkompensation der wellenlängen-selektiven Reflexion eines cholesterischen Flüssigkristalls, mittels mindestens zweier Dotierstoffe, dadurch gekennzeichnet, dass die Dotierstoffe die Bedingungen

(1) $\quad a (c_1 B_1 + c_2 B_2) = b (c_1 A_1 + c_2 A_2)$

und

(2) $\quad 1/\lambda_o(T) = a (c_1 A_1 + c_2 A_2) + aT (c_1 B_1 + c_2 B_2) + bT (c_1 A_1 + c_2 A_2)$

erfüllen, wobei $\lambda_o$ der Mittelwert des Wellenlängenbandes der selektiven Reflexion, $c_1, c_2, \ldots$ die Konzentrationen der chiralen Dotierstoffe und $A_i$, $B_i$ Koeffizienten in der folgenden Reihenentwicklung

$$(3) \qquad 1/\lambda_o(T) = \sum_{i=1}^{n} c_i\,[A_i + B_i\,(T\text{-}22°C) + C_i(T\text{-}22°C)^2]\bullet[a + b\,(T\text{-}22°C)]$$

sind und über den Betriebstemperaturbereich der Mischung $d\lambda_o/dT < 0{,}5$ nm/°C gilt.

**Claims**

1. A cholesteric liquid crystal mixture consisting of a nematic liquid crystal which is doped with at least two chiral additives and is characterized in that the chiral additives satisfy the conditions

   (1) $\quad a(c_1 B_1 + c_2 B_2) = b(c_1 A_1 + c_2 A_2)$

   and

   (2) $\quad 1/\lambda_o(T) = a\,(c_1 A_1 + c_2 A_2) + aT(c_1 B_1 + c_2 B_2) + bT(c_1 A_1 + c_2 A_2)$

   and therewith the selective reflection of the entire mixture is temperature compensated and $d\lambda_o/dT < 0.5$ nm/°C applies over the operating temperature range of the mixture, where $\lambda_o$ is the mean value of the wavelength band of the selective reflection, $c_1\ c_2,...$ are the concentrations of the chiral dopants and $A_i$, $B_i$ are coefficients in the following progression

   $$(3) \qquad 1/\lambda_o(T) = \sum_{i=1}^{n} c_i[A_i + B_i(T\text{-}22°C) + C_i(T\text{-}22°C)^2]\bullet[a + b(T\text{-}22°C)]$$

2. A method for the temperature compensation of the wavelength-selective reflection of a cholesteric liquid crystal using at least two chiral dopants, characterized in that the dopants satisfy the conditions

   (1) $\quad a\,(c_1 B_1 + c_2 B_2) = b(c_1 A_1 + c_2 A_2)$

   and

   (2) $\quad 1/\lambda_o(T) = a(c_1 A_1 + c_2 A_2) + aT(c_1 B_1 + c_2 B_2) + bT(c_1 A_1 + c_2 A_2)$

   where $\lambda_o$ is the mean value of the wavelength band of the selective reflection, $c_1\ ,c_2...$ are the concentrations of the chiral dopants and $A_i$, $B_i$ are coefficients in the following progression

   $$(3) \qquad 1/\lambda_o(T) = \sum_{i=1}^{n} c_i[A_i + B_i(T\text{-}22°C) + C_i(T\text{-}22°C)^2]\bullet[a + b(T\text{-}22°C)]$$

   and $d\lambda_o/dT < 0.5$ nm/°C applies over the operating temperature range of the mixture.

**Revendications**

1. Mélange à cristaux liquides cholestérique consistant en un cristal liquide nématique dopé par au moins deux additifs chiraux, et qui se caractérise en ce que les additifs chiraux satisfont aux conditions

   (1) $\quad a\,(c_1 B_1 + c_2 B_2 = b\,(c_1 A_1 + c_2 A_2)$

   et

(2)    $1/\lambda_o(T) = a (c_1 A_1 + c_2 A_2) + aT (c_1 B_1 + c_2 B_2) + bT (c_1 A_1 + c_2 A_2)$

de sorte qu'il y a compensation en température de la réflexion sélective du mélange global et que, dans tout l'intervalle de température opératoire du mélange, on a $d\lambda_o/dT < 0,5$ nm/°C, $\lambda_o$ étant la valeur moyenne de la bande de longueur d'ondes de la réflexion sélective, c1, c2..., les concentrations des additifs chiraux et $A_i$, $B_i$ les coefficients du développement en série suivant :

$$(3) \qquad 1/\lambda_o(T) = \sum_{i=1}^{n} c_i [A_i + B_i (T\text{-}22°C) + C_i (T\text{-}22°C)^2] \cdot [a + b (T\text{-}22°C)]$$

2.  Procédé pour compenser en température la réflexion sélective à l'égard des longueurs d'ondes d'un cristal liquide cholestérique à l'aide d'au moins deux agents dopants, caractérisé en ce que les agents dopants satisfont aux conditions

(1)    $a (c_1 B_1 + c_2 B_2) = b (c_1 A_1 + c_2 A_2)$

et

(2)    $1/\lambda_o(T) = a (c_1 A_1 + c_2 A_2) + aT (c_1 B_1 + c_2 B_2) + bT (c_1 A_1 + c_2 A_2)$

$\lambda_o$ étant la valeur moyenne de la bande de longueur d'ondes de la réflexion sélective, c1, c2... les concentrations des additifs chiraux et $A_i$, Bi les coefficients du développement en série suivant :

$$(3) \qquad 1/\lambda_o(T) = \sum_{i=1}^{n} c_i [A_i + B_i (T\text{-}22°C) + C_i (T\text{-}22°C)^2] \cdot [a + b (T\text{-}22°C)]$$

et dans tout l'intervalle de température opératoire du mélange, on a $d\lambda_o/dT < 0,5$ nm/°C.